# EUROPEAN PATENT SPECIFICATION

(11) **EP 1 846 597 B1**
(45) Date of publication and mention of the grant of the patent: **21.05.2014**
(21) Application number: 06717839.2
(22) Date of filing: 06.01.2006
(51) Int. Cl.: D01F 6/62, C08K 3/34

(54) **SYNTHETIC FILAMENTS FOR COSMETIC AND OTHER BRUSHES**
SYNTHESEFILAMENTE FÜR KOSMETISCHE UND ANDERE PINSEL UND BÜRSTEN
FILAMENTS SYNTHETIQUES POUR PINCEAUX COSMETIQUES ET AUTRES

(30) Priority: 13.01.2005 US 643502 P; 03.01.2006 US 324724
(43) Date of publication of application: 24.10.2007
(73) Proprietor: E.I. DU PONT DE NEMOURS AND COMPANY, Wilmington, DE 19898 (US)
(72) Inventor: BREZLER, Russel, A., III, Mineral Wells, West Virginia 26150 (US)
(74) Representative: Heinemann, Monica
(86) International application number: PCT/US2006/000685
(87) International publication number: WO 2006/076293

(56) References cited:
- WO-A-00/71788
- WO-A-99/26515
- GB-A- 1 028 239

## Description

### FIELD OF THE INVENTION

The present invention relates generally to synthetic filaments. More particularly, the present invention relates to a crimped synthetic filament having a mildly abrasive additive such as clay and a chemically tipped filament end.

### BACKGROUND OF THE INVENTION

Current brushes such as cosmetic brushes are made of natural bristles or synthetic filaments such as nylon or polyester. The problem with natural bristles is the inconsistency in diameter, length and overall quality from supplier to supplier and from batch to batch. In order to obtain consistent diameter natural bristle there is a significant increase in the cost. Another problem with the use of natural bristles is that they have a tendency to contain lice and lice eggs. Hence, the bristles must be treated for hygienic purposes to eliminate the presence of lice in the natural bristles. Additionally, many people have an allergic reaction to natural bristle.

It is known that synthetic filaments can overcome many of the problems of natural bristles, and various attempts have been made to replace natural bristles with synthetic. However, the use of synthetic filaments has also met with difficulties. Synthetic bristles do not have the softness, texture and overall appearance of natural bristles. If the synthetic filament is made to have the equivalent stiffness as a natural bristle the ends of the filaments will not provide the soft feel desired from the brush. Conversely, if the filaments stiffness is reduced to produce a soft feel, the filament will not have the stiffness needed for adequate pick up and deposit of the product. Furthermore, some synthetic bristle brushes (especially those for applying make up such as mascara) has been found to cause irritation to sensitive eyes, as the brushes were not made from bristles of a small enough diameter. Use of small-diameter bristles in cosmetic brushes has also been found to be unacceptable as the bristles pick up too little product and simply "dump" cosmetic product onto the skin.

The following disclosures may be relevant to various aspects of the present invention and may be briefly summarized as follows:
US Patent No. 5,976, 692 to Brezler et al. discloses synthetic monofilaments made from a thermoplastic elastomeric composition containing an aluminum silicate and mechanically crimping the monofilament.

It is desirable to develop a bristle that can be used in cosmetic and other brushes which feels soft like natural bristles to the skin, is pleasing in appearance, and is free from natural contaminants to eliminate the need for sterilization prior to manufacture.

### SUMMARY OF THE INVENTION

Briefly stated, and in accordance with one aspect of the present invention, there is provided a filament comprising a polymer material containing a clay additive wherein said filament is crimped along a length of the filament and has an end that is chemically tipped.

Pursuant to another aspect of the present invention, there is provided a brush having filaments comprising a polymer material containing a clay additive wherein said filament is crimped along a length of the filament and has an end that is chemically tipped.

Pursuant to another aspect of the present invention, there is provided an application package using a crimped, chemically tipped synthetic filament having a mildly abrasive additive such as clay. The application packages are for applying make up such as mascara, nail polish and blush. The filaments used for applying product can be attached to the brush applicator handle by bending the filaments at about their midpoints. Or, the filaments can be attached to the brush applicator handle without bending using the non-tipped end for attachment to the handle. The filaments in the application packages can be attached to the handles by staples, epoxy, heat setting or any other know means for fastening fibers.

### BRIEF DESCRIPTION OF THE DRAWINGS

The invention will be more fully understood from the following detailed description, taken in connection with the accompanying drawings, in which:
Figure 1a is a schematic view of a chemically tipped wavy filament having a mild abrasive additive.
Figure 1b is a schematic view of a double end chemically tipped wavy filament having a mild abrasive additive.
Figure 2 is a schematic view of a nail polish brush with chemically tipped wavy filaments having mild abrasive additives.
Figure 3 is a schematic view of a blush brush with chemically tipped wavy filaments having mild abrasive additives in a ferruled handle.
Figure 4 is a schematic view of a blush brush with chemically tipped wavy filaments having mild abrasive additives.
Figure 5 is a schematic view of a mascara brush with chemically tipped wavy filaments having a mild abrasive additive.
Figure 6 is a cross-sectional view of the mascara brush package embodiment of the present invention showing the wiper system and the reservoir using the chemically tipped wavy filaments having a mild abrasive additive.
Figure 7 is a cross-sectional view of the nail polish package embodiment of the present invention using the chemically tipped wavy filaments having a mild abrasive additive.

While the present invention will be described in connection with a preferred embodiment thereof, it will be understood that it is not intended to limit the invention to that embodiment. On the contrary, it is intended to cover all alternatives, modifications, and equivalents as may be included within the spirit and scope of the invention as defined by the appended claims.

### DETAILED DESCRIPTION OF THE INVENTION

The present invention is directed to chemically tipped synthetic monofilaments having a softness, texture and non-uniform wavy appearance for replacement of natural bristles. The present invention differs and is an improvement from what is currently sold on the market as a natural bristle replacement in that it incorporates the combination of: a polymeric material, a mild abrasive additive such as clay, a mild crimp, and a single or double chemically tipped end. The present invention shows improved "pick up" capability of the filament over the currently available synthetic filaments for brushes. (i.e. a filament that does not have clay (textured surface), synthetic, chemically tipped and mild crimp).

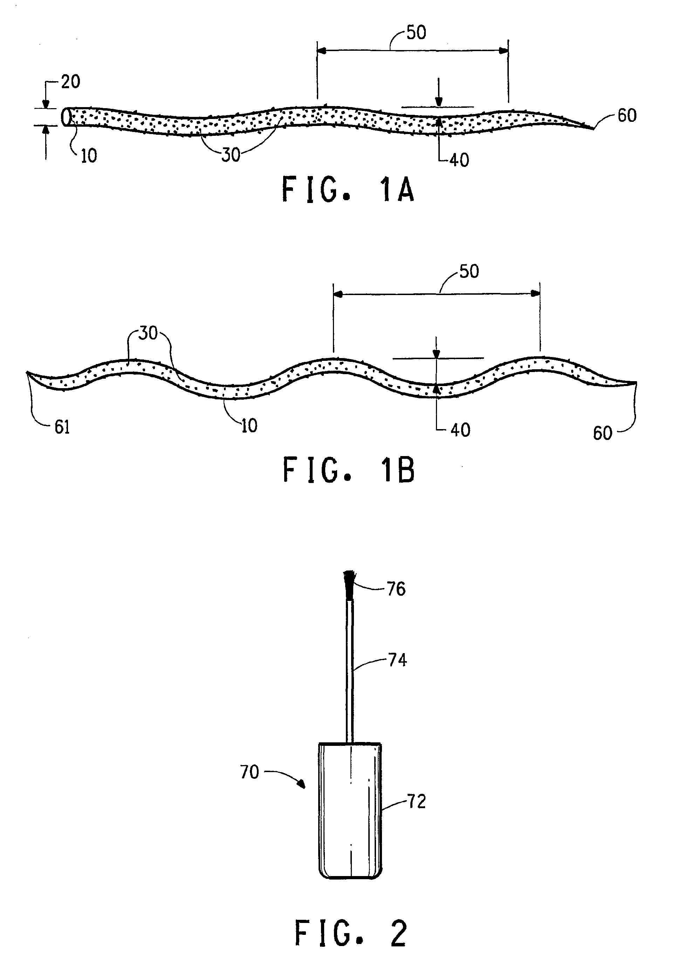

Reference is now made to the drawings for a detailed description of the present invention. Figure 1a discloses a schematic view of a single end chemically tipped wavy synthetic filament 10 having a mild abrasive additive 30. Figure 1b discloses a schematic view of a double end chemically tipped 60, 61 wavy synthetic filament 10 having a mild abrasive additive 30.

The synthetic monofilaments or bristles of the present invention are formed from a polymeric material. The polymeric material can be polyesters, nylon, thermoplastic elastomers and polyolefins. The polyesters for use in the present invention include PBT (polybutylene terepthalate) or PET (polyethylene terepthalate) and PET/PBT blends and copolymers. The nylon materials for use in the present invention include nylon 6, 66, 610, 612, and 11 and any blend or copolymers of these. A preferred embodiment of the filament is produced from PBT polyester and contains a mild abrasive to dull the appearance and improve pickup of the filament. The filament also contains a mild crimp to improve appearance in the brush and also improve pickup. The filament is then chemically tipped to produce a very fine tip and provide a very soft feel in the brush. The single or double chemically tipped end 60, 61 not only provides a desirable soft end but also improves the pickup of the materials.

A preferred embodiment of a mild abrasive additive is the use of clay. The filaments of the present invention can be developed with 5% of a hydrous kaolin clay by weight with an average particle size of 1.5 microns. The clay additive 30 creates minute protrusions from the filament that aid in the "pick up" capability of the filament 10, particularly when used in a brush. For example, the filaments of the present invention when used in a blush brush 80 or 90 enable improved pick up of the blush powder (i.e. point a) for transfer or application to the skin or desired surface (i.e. point b). Other components that can be used in place of the hydrous kaolin clay include calcined kaolin clays, calcium carbonates, aluminum silicates, and aluminum oxides. Particle sizes range from 0.3 - 5 microns. The range needs to be from 2-10%, and preferably 2-5% by weight to provide enough appearance impact and improve pickup but not create processing issues during extrusion.

The brush of the present invention has a stiffness greater than a flexural modulus of 190 ksi. The filaments of the present invention have a flexural modulus equivalent to that of natural bristles. It is preferable that the flexural modulus range from about 400 - 700 ksi. It is more preferable that the flexural modulus range from about 500 - 700 ksi.

The filament 10 is wavy or crimped using a standard or known crimping process that provides a crimp amplitude 40. The crimp amplitude 40 occurs at a desired frequency (waves/inch). The wave frequency is shown in Figures 1a & 1b by the reference number 50. The wavy filament is defined as having an amplitude of 1-2 mils and a frequency of 4-8 waves per inch. The wavy filament or mildly crimped filament of the present invention can be created using a standard process. Known methods of creating the mild crimp or wavy filament can be used. One such method is described in US patent 5,976,692, which describes a general method for producing synthetic monofilaments comprising several steps, and is herein incorporated by reference. The first step includes extruding a monofilament formed of a polymeric material described above containing a clay in relative proportions covered by the ranges described herein. For this purpose, any common polymer extrusion method for monofilaments can be employed and the particular extrusion procedure used in no way limits the methods according to the present invention. Such extrusion process will also include the usual steps of extruding, quenching, drawing and relaxing the filament rope. The relaxing step includes a conditioning process including heating the monofilament from about 320° F (165°C) to about 347°F (about 175° C) for between 10 and about 20 seconds, and most advantageously at about 338° F (about 170°C) for about 20 seconds. Once these steps are completed, the monofilament may be either further post-conditioned or crimped to achieve a non-uniform wavy appearance. Both the post conditioned and crimping process achieve a very natural looking wave in the filament rope and the final brush.

The filaments have a base diameter 20 on one end. The base diameter of the filament ranges from about (0.0254 to 0.254 mm) (0.001" to 0.010") in diameter. This diameter range is preferable for use in cosmetic and other make up brushes. The base diameter does not vary along the length.

The chemically tipped portion of the filaments will have a length from 0.04"-0.4" and have a tip diameter less than 0.001".

Figures 2-5 shows examples of brush products made using the chemically tipped, crimped synthetic filament containing a mild abrasive additive. These include nail polish brushes, blush brushes and mascara brushes. The present invention in these types of brushes and others improves the ability of the brush filaments to "pick up" material such as nail polish, powder and mascara from a receptacle or reservoir (i.e. point a) and transfer that material to a surface such as a nail, face or eyelash (i.e. point b).

Referring now to Figure 2, which shows a schematic view of a nail polish brush with chemically tipped synthetic wavy filaments having clay additives. The nail polish brush 70 consists of a cap or handle 72 to which the stem 74 is attached. The stem 74 is usually secured to the cap 72 with a press fit or it can be glued in place. The filaments 76 are attached to the stem by folding a group of filaments at their mid section (40%-60% of the filament length) and inserting the bend into the end of the stem 74. The filaments are held in place with a staple.

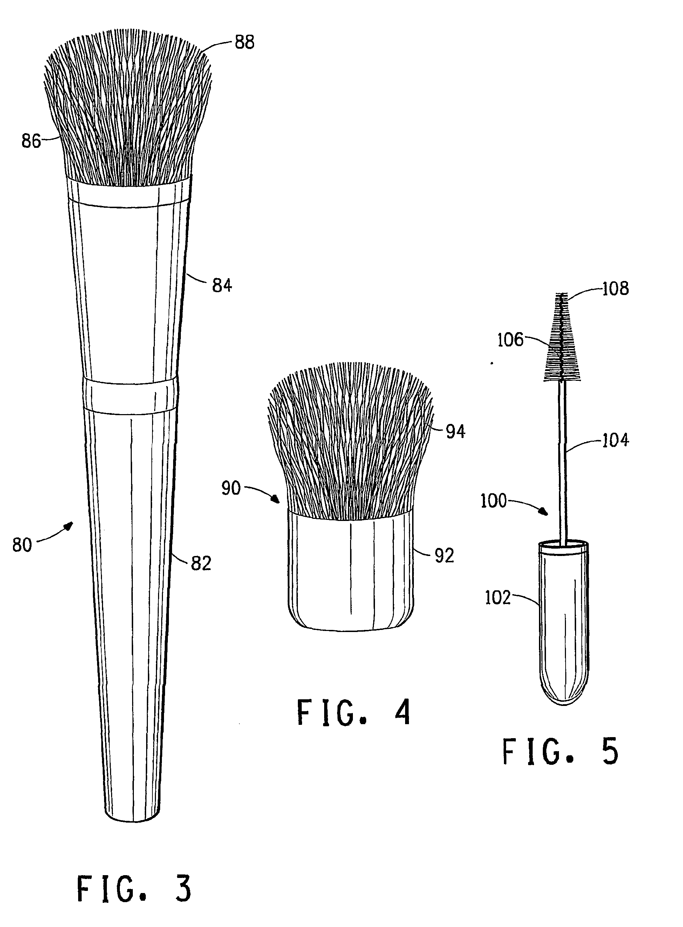

Referring now to Figure 3, which shows a schematic view of a blush brush 80 with wavy filaments 86, containing clay additives having chemically tipped ends 88 in a ferruled handle. The brush consists of a handle 82 (wooden or synthetic) to which a ferrule 84 (metal or polymeric) is attached. The ferrule 84 is secured to the handle 82either through a mechanical fastener (nails) or by epoxy. The ferrule holds the filaments of the current invention and they are secured to the ferrule 84 by either epoxy, heat setting, or other known methods of fastening or securing filaments.

Referring now to Figure 4, which shows a schematic view of an alternate blush brush 90 with chemically tipped wavy filaments 94 having clay additives. The filaments are secured to the handle 92 by epoxy or heat setting.

Reference is now made to Figure 5, which shows a schematic view of a mascara brush 100 with chemically tipped wavy filaments having clay additive. The brush is inserted into to plastic stem 104. The plastic stem is attached to the cap 102 using a press fit. The brush is formed by twisting together two metal wires in such a way that the filaments108 are trapped and secured by the twisted wire. The filament free ends of the filaments extend radially outward from the twisted metal core 106.

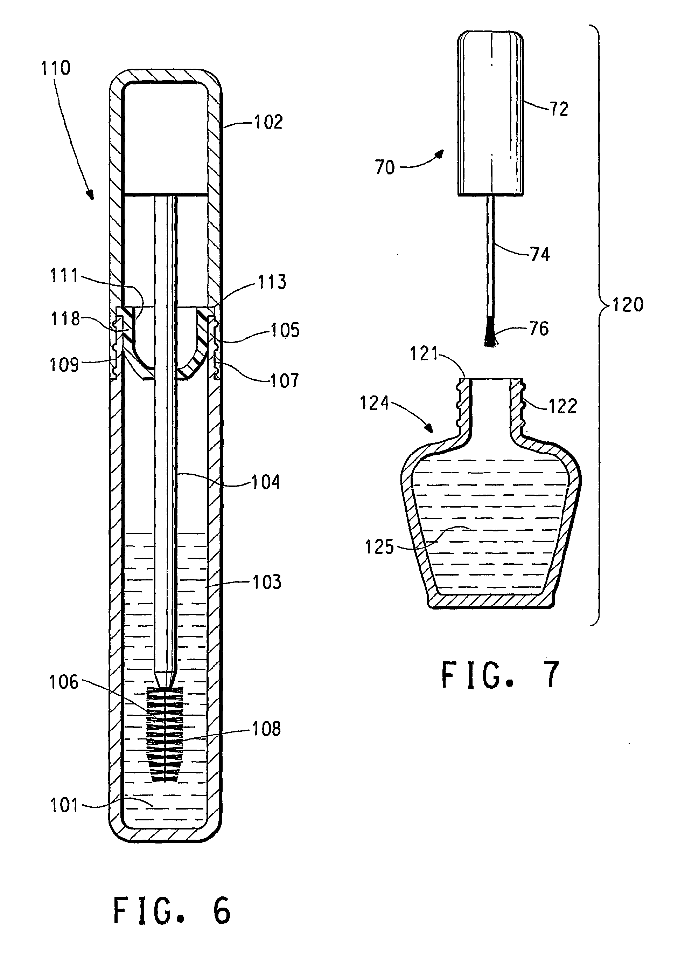

Figures 6-7 show brush packages using the chemically tipped, crimped synthetic filament with a mild abrasive. These brush packages of the present invention include a mascara brush package as shown in Figure 6 and a nail polish brush package shown in Figure 7.

Reference is now made to Figure 6, which shows a cross-sectional view of an embodiment of the mascara brush package or application system. The mascara brush package includes the brush with the chemically tipped, crimped synthetic filament with a mild abrasive; a reservoir 103 and a wiper mechanism 118 to remove excess product from the mascara brush before application.

The mascara brush package 110 or application system of Figure 1 has a mascara application device 100 contained in a reservoir 103. The application device is shown in Figure 5. The application device 100 can be attached, for example by screwing the cap 102 onto the neck 105 of the reservoir 103. The neck has an external screw thread 107 capable of cooperating with a complementary screw thread 109 formed on the lower portion of the interior surface of the cap 102. The neck 105 has a free circular edge 113 defining an opening 111. Mounted in this opening is a wiper 118, formed of an elastically deformable material. The wiper or wring-out member 118, is in the form of a thimble, having an end facing towards the tube shaped reservoir 103. The end is open, so as to form a circular wiping lip capable, as the application device 100 is extracted from the reservoir, of removing excess product 101 (e.g. mascara) from the stem 104 and the application filaments 108. In the storage position, the wiper 118 has the stem 104 passing through it. For a more detailed description of a nail polish package embodiment see US Patent No. 6, 280,113 which is herein incorporated by reference.

Reference is now made to Figure 7, which shows a cross-sectional view of an embodiment of a nail polish package or application system 120. The nail polish application system 120 includes a reservoir 124 and a nail polish applicator 70 equipped with a grasping collar, or handle 72. The reservoir 124, preferably made of glass, contains a liquid or viscous product 125 (e.g. nail varnish) that is to be applied to a surface region. The reservoir 124 has a neck 121 defining an opening 126. The neck 121 has a screw thread 122 capable of cooperating with a complementary screw thread on the inside of the collar72. The outside of the collar 72 can be grasped as a handle.

With continued reference to Figure 7, the collar 72 is attached to one end of the stem 74, and the opposite end of the stem 74 is connected to an application element having filaments 76 of the present invention. When the application system 120 is closed by screwing the collar 72 onto the reservoir 124, the tuft of filaments 76 dips into the product 125. When the user wishes to apply some product 125 to a surface region, she unscrews the cap 72 and extracts the application device 70 from the reservoir. When the application device holds an excess of product 125, the user wipes it against the free edge of the neck 121 to wring out any excess product. It should be noted that the application element preferably remains well laden and has a good ability to hold on to the varnish without forming drops even after a number of wringing-out passes. For a more detailed description of a nail polish package embodiment see US Patent No. 6, 280,113 which is herein incorporated by reference.

### Examples:

The synthetic filament in this invention was produced with a PBT polyester (Crastin® supplied by E.I. DuPont) and extruded using a typical extrusion process for monofilaments. The PBT resin was blended with 5% of a kaolin clay with an average particle size of 1.2 microns and the blend was melted using a twin-screw extruder (43 mm twin-screw extruder manufactured by Werner & Pfleiderer). The filaments were extruded using a melt pump (manufactured by Zenith pumps) through a spinnerette plate containing 0.018" diameter capillaries at temperatures of 235°C. The resulting monofilaments were then quenched and drawn to a final diameter of 0.003" (3 mils) or 0.004" (4 mils). The resulting filaments were then conditioned, crimped and assembled into hanks with a diameter of about 2" and a length of about 96".

The crimping process consisted of passing the individual filaments between two crimping gears to produce a mild wavy appearance in the filaments. For a more detailed explanation of the crimping process, see US Patent No. 5, 976,692. The hanks were then wrapped and cut into about 92" lengths. The about 92" long hanks were then cut into about 2.5" cut pieces. The cut pieces were then chemically tipped using the following process: The filaments were chemically tipped in,a caustic solution of NaOH at a 40% concentration for 15 minutes at 120C. The paper around the filament bundles was removed and the bundle was secured at either the untipped end or the midsection with rubber bands. The bundle ends were submerged into the solution to a depth required the achieve the desired tip length. At the end of the 15 minutes, the bundles were removed from the solution and rinsed with clean water for 5 minutes to achieve a surface PH of 7. After rinsing, the bundles were dried in a centrifuge for 3 minutes. The filaments were then re-wrapped with paper and rubber bands and packaged for shipment. (In instances where both ends of the filament are to be chemically tipped, the above process is repeated for the other end of the filament.) The chemically tipped process created a final tip diameter of < 0.001".

Although PBT polyester was used in the example, other polyesters, polyester blends and copolymers are also acceptable as well as nylons, nylon blends, nylon copolymers, thermoplastic elastomers and polyolefins.

It is therefore, apparent that there has been provided in accordance with the present invention, a chemically tipped crimped synthetic filament with a clay additive that fully satisfies the aims and advantages hereinbefore set forth. While this invention has been described in conjunction with a specific embodiment thereof, it is evident that many alternatives, modifications, and variations will be apparent to those skilled in the art.

## Claims

1. A filament comprising a polymer material containing a clay additive wherein said filament is crimped along a length of the filament and has an end that is chemically tipped.

2. A filament according to claim 1, wherein the filament has both ends chemically tipped.

3. A filament according to claim 1, wherein the filament has improved ability to pick up product for transfer of the product from point a to point b.

4. A filament according to claim 1, wherein the filament polymer is selected from the group consisting of polyesters, nylon, thermoplastic elastomers and polyolefins,
wherein the filament polymer is PBT or
PET, or
wherein the nylon is selected from the group consisting of 6, 66, 610, 612 and 11.

5. A filament according to claim 1, wherein the filament has a base diameter ranging from about (0,0254-0,254 mm) (.001 inches - .010 inches).

6. A brush having filaments made according to any one of claims 1-5.

7. A brush according to claim 6, for applying make up.

8. A brush according to claim 7, comprising a ferrule and a handle, wherein said filaments are secured in the ferrule and said ferrule is connected to the handle,
for applying blush.

9. A brush according to claim 8, wherein said filaments form a brush from bending a plurality of filaments at their midpoints and fastening said midpoints to the handle,
wherein the filaments are secured to the handle with a staple.

10. A brush according to claim 6, comprising a plurality of filaments having free ends opposite the chemically tipped ends, wherein the free ends are inserted into the handle of said brush and secured by heat setting or epoxy.

11. A brush according to any of claims 9-10 for applying nails polish.

12. A brush according to claim 7, said brush having two twisted wires forming a core for securing said filaments and said filaments extending radially outward from the twisted wire core.

13. A brush according to claim 12, for applying mascara.

14. A cosmetic package comprising a brush according to claim 13 and further comprising a reservoir, and mechanism for removing excess mascara from the brush creating a mascara brush package.

## Patentansprüche

1. Filament umfassend ein Polymermaterial, das ein Tonzusatzmittel enthält, wobei das Filament einer Länge des Filaments entlang gekräuselt ist und ein Ende aufweist, das an der Spitze chemisch behandelt worden ist.

2. Filament nach Anspruch 1, wobei beide Enden des Filaments an der Spitze chemisch behandelt worden sind.

3. Filament nach Anspruch 1, wobei das Filament eine verbesserte Fähigkeit aufweist, Produkt zum Übertragen des Produkts von Punkt a zu Punkt b aufzunehmen.

4. Filament nach Anspruch 1, wobei das Filamentpolymer aus der Gruppe ausgewählt ist bestehend aus Polyestern, Nylon, thermoplastischen Elastomeren und Polyolefinen,
wobei das Filamentpolymer PBT oder PET ist oder
wobei das Nylon aus der Gruppe ausgewählt ist bestehend aus 6, 66, 610, 612 und 11.

5. Filament nach Anspruch 1, wobei das Filament einen Basisdurchmesser im Bereich von etwa 0,0254 - 0,254 mm (0,001 Zoll - 0,10 Zoll) aufweist.

6. Pinsel, der Filamente aufweist, die nach einem der Ansprüche 1 bis 5 hergestellt sind.

7. Pinsel nach Anspruch 6 zum Auftragen von Make-up.

8. Pinsel nach Anspruch 7, umfassend eine Presshülse und einen Griff, wobei die Filamente in der Presshülse befestigt sind und die Presshülse mit dem Griff verbunden ist, zum Auftragen von Wangenrot.

9. Pinsel nach Anspruch 8, wobei die Filamente einen Pinsel durch Biegen einer Vielzahl von Filamenten an ihren Mittelpunkten und Befestigen der Mittelpunkte an den Griff bilden,
wobei die Filamente an den Griff mit einer Heftklammer befestigt sind.

10. Pinsel nach Anspruch 6, umfassend eine Vielzahl von Filamenten, die freie Enden den Enden, die an der Spitze chemisch behandelt worden sind, gegebenüber aufweisen, wobei die freien Enden in den Griff des Pinsels eingeführt und durch Thermofixieren oder Epoxy befestigt sind.

11. Pinsel nach einem der Ansprüche 9 - 10 zum Auftragen von Nagellack.

12. Pinsel nach Anspruch 7, wobei der Pinsel zwei verdrehte Drähte aufweist, die einen Kern zum Befestigen der Filamente bilden, und die Filamente sich von dem verdrehten Drahtkern aus radial nach außen erstrecken.

13. Pinsel nach Anspruch 12 zum Auftragen von Mascara.

14. Kosmetikpackung umfassend einen Pinsel nach Anspruch 13 und des Weiteren einen Behälter und einen Mechanismus zum Entfernen von überschüssigem Mascara von dem Pinsel unter Schaffung einer Mascarapinselpackung umfassend.

## Revendications

1. Filament comprenant un matériau polymère contenant un additif argileux, dans lequel ledit filament est frisé sur une longueur du filament et a une extrémité qui a été traitée chimiquement.

2. Filament selon la revendication 1, dans lequel le filament a les deux extrémités traitées chimiquement.

3. Filament selon la revendication 1, dans lequel le filament a une capacité améliorée de prélever un produit pour le transfert du produit du point a au point b.

4. Filament selon la revendication 1, dans lequel le polymère du filament est sélectionné parmi le groupe constitué des polyesters, du nylon, des élastomères thermoplastiques et des polyoléfines,
dans lequel le polymère du filament est du PBT, ou du PET, ou
dans lequel le nylon est sélectionné parmi le groupe constitué du 6, 66, 610, 612 et 11.

5. Filament selon la revendication 1, dans lequel le filament a un diamètre de base s'étendant d'environ (0,0254 mm à 0,254 mm) 0,001 pouce à 0,010 pouce.

6. Brosse ayant des filaments fabriqués selon l'une quelconque des revendications 1 à 5.

7. Brosse selon la revendication 6 pour l'application de maquillage.

8. Brosse selon la revendication 7, comprenant une virole et une poignée, dans laquelle lesdits filaments sont solidement fixés dans la virole et ladite virole est connectée à la poignée, pour l'application de fard à joues.

9. Brosse selon la revendication 8, dans laquelle lesdits filaments forment une brosse par le biais de la flexion d'une pluralité de filaments au niveau de leurs points médians et de la fixation desdits points médians à la poignée,
dans laquelle les filaments sont solidement fixés à la poignée avec une agrafe.

10. Brosse selon la revendication 6, comprenant une pluralité de filaments ayant des extrémités libres opposées aux extrémités traitées chimiquement, dans laquelle les extrémités libres sont insérées dans la poignée de ladite brosse et solidement fixées par durcissement thermique ou époxy.

11. Brosse selon l'une quelconque des revendications 9 à 10 pour l'application de vernis à ongles.

12. Brosse selon la revendication 7, ladite brosse ayant deux câbles torsadés formant un noyau pour fixer solidement lesdits filaments et lesdits filaments se prolongeant de manière radiale vers l'extérieur à partir du noyau des câbles torsadés.

13. Brosse selon la revendication 12, pour l'application de mascara.

14. Conditionnement cosmétique comprenant une brosse selon la revendication 13 et comprenant en outre un réservoir, et un mécanisme de retrait du mascara en excès de la brosse créant un conditionnement de brosse pour mascara.
